# EUROPÄISCHE PATENTSCHRIFT

(11) **EP 2 295 912 B1**
(45) Veröffentlichungstag und Bekanntmachung des Hinweises auf die Patenterteilung: **04.09.2013**
(21) Anmeldenummer: 10008280.9
(22) Anmeldetag: 09.08.2010
(51) Int. Cl.: F28D 1/03, F28F 3/02

(54) **Heiz-Kühlkörperpaneel**
Heater-cooler panel
Panneau de corps froid de chauffage

(30) Priorität: 24.08.2009 AT 13332009
(43) Veröffentlichungstag der Anmeldung: 16.03.2011
(73) Patentinhaber: Rettig ICC bv, 6199 AA Maastricht-Airport (NL)
(72) Erfinder: Springer, Arnold, Dipl.-Ing., 8665 Langenwang (AT); Doppelreiter, Peter, Ing., 8650 Kindberg (AT); Iivonen, Mikko, 00630 Helsinki (FI)
(74) Vertreter: Wildhack, Andreas

(56) Entgegenhaltungen:
- BE-A1- 894 761
- DE-A1- 3 500 752
- GB-A- 1 313 438

## Beschreibung

Die Erfindung betrifft ein Heiz-Kühlkörperpaneel gemäß dem Oberbegriff des Patentanspruches 1.

Heizkörper dieser Art sind beispielsweise aus der GB 1313438 A oder der DE 3500752 A1 bekannt.

Es wird bemerkt, dass der Gegenstand der Erfindung ein Heizkörperpaneel als auch ein Kühlkörperpaneel sein kann. Im Folgenden wird deshalb weitgehend auf ein Paneel Bezug genommen. Derartige Paneele werden in Alleinstellung oder zur Ausbildung von mehrlagigen Heiz-Kühlkörpern verwendet.

Derartige Paneele sind bekannt und sollen unter möglichst exaktem Beibehalt der Form und Konstruktion ihrer Front- bzw. Vorderschale verbessert werden. Diese Verbesserung soll insbesondere in der Effizienz des Paneels liegen, die durch möglichst geringen Wasserinhalt und einer damit erzielten hohen Reaktionsgeschwindigkeit beim Regeln erhöht werden soll. Ferner soll die Wärmeleistung vergrößert werden, indem die benetzte Fläche der beiden Halbschalen vergrößert wird und gleichzeitig der Luftquerschnitt für die am Paneel vorbei bewegte Luft vergrößert wird. Des weiteren sollen die Konvektionsrippen, insbesondere bei mehrlagigen Heiz-Kühlkörpern eine größere Bautiefe aufweisen können. Letztlich sollen die mittlere Oberflächentemperatur der Halbschalen und damit auch die Strahlungsleistung je nach Verwendung vergrößert bzw. verkleinert werden. Diese Ziele werden bei einem Heiz-Kühlkörperpaneel der eingangs genannten Art mit den im Kennzeichen des Anspruches 1 angeführten Merkmale erreicht.

Durch die Aufnahme der Erhebungen der einen Halbschale in Vertiefungen der jeweils anderen Halbschale wird ein sehr dünn gebautes Paneel erreicht, entsprechend dünn ist der Strömungsweg für das Wärmeträgerfluid gehalten. Dafür werden jedoch die Innenflächen der beiden Halbschalen nahezu vollständig in dem Bereich zwischen den Sammelkanälen vom Wärmeträgerfluid benetzt, sodass sich ein ausgesprochen guter und großflächiger Wärmeübergang vom Wärmeträgerfluid zu den Halbschalen und umgekehrt ergibt. Der Fluidinhalt ist gegenüber herkömmlichen Paneelen reduziert; aufgrund der wesentlich geringeren Fluidmenge wird die Regelträgheit reduziert.

Bei bevorzugten Ausführungsformen der Erfindung kann vorgesehen sein, dass die Halbschalen in insbesondere linienförmigen, längs des Strömungsweges verlaufenden bzw. gelegenen Berührungsflächen aneinander anliegen bzw. sich berühren

Ein variabler Aufbau des Heiz-Kühlkörperpaneels ergibt sich vor allem, wenn der Strömungsweg von den in den beiden Halbschalen abwechselnd aufeinanderfolgenden Erhebungen und Vertiefungen begrenzt ist. Es kann aber auch vorgesehen sein, dass der Strömungsweg von allen vorhandenen Erhebungen und Vertiefungen oder nur von jeder zweiten Erhebung in der einen Halbschale und der zugeordneten Vertiefung in der jeweils anderen Halbschale gebildet ist.

Eine spezielle Ausführungsform sieht vor, dass die Innenwandflächen von in der einen, vorzugsweise der außen liegenden, Halbschale aufeinander folgenden Erhebungen mit den Innenwandflächen der diese Erhebungen aufnehmenden Vertiefungen der anderen Halbschale verbunden sind, wobei die Innenwandfläche der Erhebungen der anderen Halbschale von der Innenwandfläche der Vertiefungen der einen Halbschale den Erhebungen und den Vertiefungen im Abstand voneinander liegen und der derart begrenzte Raum den Strömungsweg darstellt.

Es ergeben sich damit je nach der Höhe der Erhebungen und Vertiefungen bzw. deren Breite Variationsmöglichkeiten für den Querschnitt des Gesamtströmungsweges bei gleichzeitig stabilem Aufbau des Paneels, geringem Wasserdurchsatz und optimaler Heizleistung.

Der Aufbau derartiger Paneele wird vereinfacht, wenn vorgesehen ist, dass die Halbschalen zwischen den Sammelkanälen bzw. im Bereich des zwischen den Halbschalen ausgebildeten und von den Erhebungen und Vertiefungen begrenzten Strömungsweges in Schnittebenen senkrecht zum Strömungsweg gleiche Querschnittsform der Erhebungen und Vertiefungen zeigen.

Eine gute Durchflusscharakteristik wird erreicht, wenn die in den jeweiligen Halbschalen aufeinander folgenden Erhebungen und Vertiefungen in einer Schnittebene senkrecht zum Strömungsweg ungleiche Breite aufweisen, wobei das Verhältnis der Breiten B:B' der Vertiefungen und der Erhebungen in der Halbschale zwischen 1:1 und 1:2 liegt oder in der(n) im Gebrauch die Vorderseite (V) oder bei einem mehrlagigen Heiz-Kühlkörper die Vorderseite und die Rück- bzw. Wandseite bildenden Halbschale(n) die Vertiefungen schmäler sind als die Erhebungen.

Ein stabiler Aufbau bzw. guter Zusammenhalt der Paneele ergibt sich, wenn im Verlauf bzw. längs einer im Gebrauch die Rückfläche eines Paneels oder eine Innenfläche eines zweilagigen Heiz-Kühlkörpers bildenden Halbschale in den Vertiefungen dieser Halbschale eine Anzahl von auf die jeweils andere, die Vorderfront oder die Rückwand bildende Halbschale hin gerichtete bzw. ausgeprägte Verbindungsnoppen ausgebildet ist, die mit den Wandbereichen der Vertiefungen dieser Halbschale durch Schweißen, Löten, Kleben oder Clinchen verbunden sind und/oder wenn im Verlauf bzw. längs der im Gebrauch die Rückfläche des Paneels oder eine Innenfläche eines zweilagigen Heiz-Kühlkörpers bildenden Halbschale in den Wandbereichen der Erhebungen dieser Halbschale eine Anzahl von auf die jeweils andere, die Vorderfront bildende oder die außenliegende Halbschale hin gerichtete bzw. ausgeprägte Abstandshalter ausgebildet ist, die sich an der Innenwandfläche der Vertiefungen dieser gegenüberliegend angeordneten Halbschale abstützen und die beiden Halbschalen gegeneinander beabstanden und mit dieser Halbschale gegebenenfalls durch Schweißen, Löten, Kleben und/oder Clinchen verbunden sind und/oder wenn an den Außenwandflächen der Vertiefungen der im Gebrauch die Rückseite eines Paneels oder die Innenwandfläche eines Paneels eines zweilagigen Heiz-Kühlkörpers darstellenden Halbschale die Basisflächen eines wellenförmig bzw. winkelig abgebognen bzw. abgekanteten Konvektionsbleches, vorzugsweise durch Schweißen, Löten, Kleben und/oder Clinchen, befestigt sind.

Bevorzugte Ausführungsformen der Erfindung ergeben sich mit den konstruktive, wärmetechnische und stabilitätsmäßige Vorteile bietenden Merkmalen der Unteransprüche bzw. aus der folgenden Beschreibung und den Zeichnungen.
Fig. 1 zeigt eine Frontansicht eines erfindungsgemäßen Paneels. Bei einem mehrlagigen Heiz-Kühlkörper sind dessen Außenflächen bzw. Vorder- und Rückwandflächen in dieser dargestellten Art und Weise ausgebildet.
Fig. 2 zeigt die Rückseite eines Paneels gemäß Fig. 1 bzw. eine Ansicht der Rückseite eines Paneels bzw. der einander gegenüberliegenden, nach Innen gerichteten Halbschalen der zu einem doppellagigen bzw. mehrlagigen Heiz-Kühlkörper zusammengefügten Paneele.
Fig. 3 zeigt einen Horizontalschnitt durch einen doppellagigen Heiz-Kühlkörper gemäß dem Stand der Technik.
Fig. 4 zeigt einen Horizontalschnitt durch einen erfindungsgemäßen doppellagigen Heiz-Körper.
Fig. 5 zeigt eine erste Ausführungsform eines einlagigen Heiz-Kühlkörpers mit daran angebundenen Konvektorflächen. Fig. 5a zeigt einen Schnitt längs A-A in Fig. 5; Fig. 5b zeigt einen Schnitt längs B-B, Fig. 5c zeigt einen Schnitt längs C-C und Fig. 5d zeigt einen Schnitt längs D-D.
Fig. 6 zeigt ein Beispiel aus der Stand der Technik eines einlagigen Heiz-Kühlkörpers mit daran angebundenen Konvektorflächen. Fig. 6a zeigt einen Schnitt längs A-A in Fig. 6; Fig. 6b zeigt einen Schnitt längs B-B, Fig. 6c zeigt einen Schnitt längs C-C und Fig. 6d zeigt einen Schnitt längs D-D.
Fig. 9 und 10 zeigen schematisch Teilschnitte durch unterschiedliche Ausführungsformen von erfindungsgemäßen einlagigen Heiz-Kühlkörperpaneelen, die allerdings auch doppellagig oder mehrlagig ausgebildet sein können.

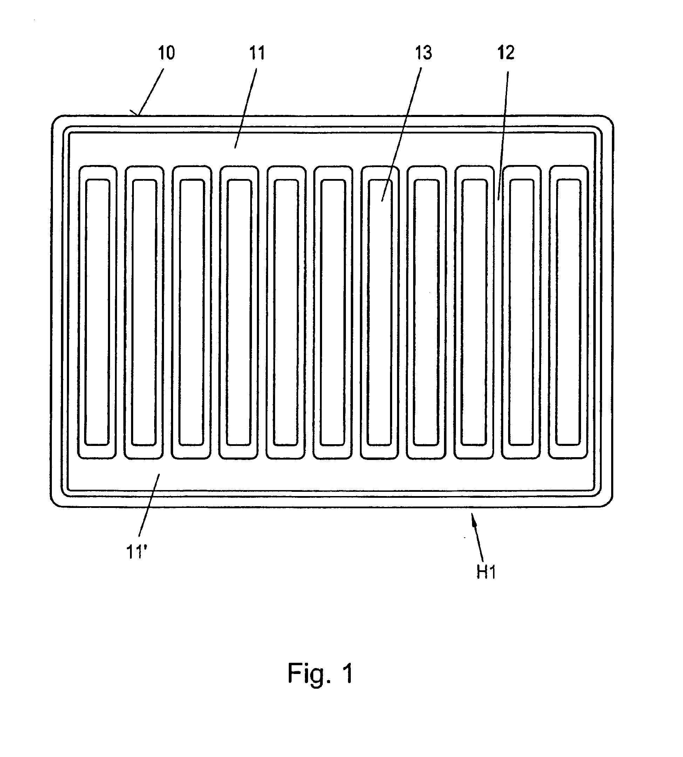

Fig. 1 zeigt ein Paneel in Frontansicht bzw. seine Vorder- und Sichtseite (V). Die Gliederung bzw. Ausformung der Oberfläche dieses Paneels entspricht herkömmlichen Paneelen.

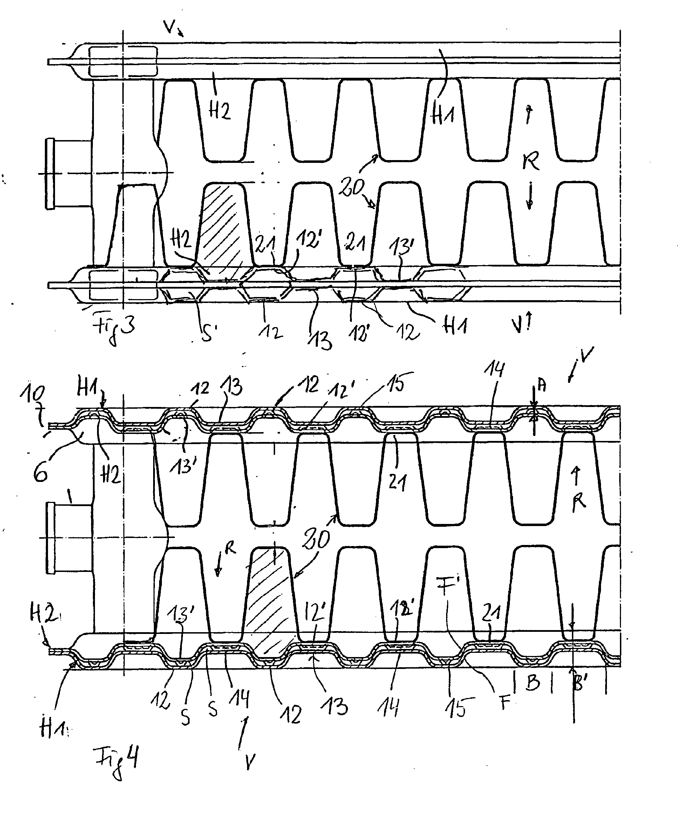

Fig. 3 zeigt einen bekannten doppellagigen Heiz-Kühlkörper im Schnitt, bei dem Halbschalen H1, die nach vorne weisende Frontfläche V und die nach außen hinten bzw. im Gebrauch zu einer Wand weisende Rückfläche bilden, so wie diese Halbschalen H1 in Fig. 1 dargestellt sind. Die jeweiligen Innenflächen dieses Heiz-Kühlkörpers werden von gleichermaßen aufgebauten Halbschalen H2 gebildet. Man erkennt in dieser schematischen Schnittansicht, dass die die Frontflächen V darstellende Halbschale H1 und die die jeweilige Rückfläche R bzw. die innenliegende Fläche eines Paneels bildende Halbschale H2 wellenförmige bzw. abgekantete, aufeinanderfolgende Erhebungen 13, 13' und Vertiefungen 12, 12' darstellende Wandflächenbereiche aufweisen, welche Strömungskanäle S zwischen sich begrenzen. Dazu sind die Halbschalen H1 und H2 miteinander verbunden, beispielsweise durch Schweißen, Löten oder Kleben.

Es wird für alle folgenden Ausführungen bemerkt, dass als Erhebungen einer Halbschale H1 oder H2 Wandflächenbereiche bezeichnet werden, die sich - vom Volumen des Strömungskanals her gesehen - in den Raum zwischen den beiden Halbschalen H1, H2 hinein erstrecken bzw. diesen verkleinern, wogegen Vertiefungen in den Halbschalen H1 und H2 den Raum zwischen den Halbschalen H1, H2 erweitern bzw. vom Inneren der Strömungskanäle gesehen die Strömungskanäle in Form einer Ausbuchtung begrenzen. Die Erhebungen 13, 13' liegen bezogen auf die Außenfläche der jeweiligen Halbschale H1, H2 weiter innen bzw. stellen Einbuchtungen der Außenfläche dar.

Die voneinander beabstandet gelegenen Vertiefungen 12, 12' der Halbschalen H1, H2 begrenzen zwischen sich den Strömungsweg bzw. Strömungskanäle S, die gemäß Fig. 1 von einem seitlich, insbesondere oben gelegenen Sammelkanal 11 zu einem gegenüberliegenden seitlichen, insbesondere unten gelegenen Sammelkanal 11' verlaufen. An der Rückseite R der innenliegenden Halbschalen H2 der beiden Paneele ist jeweils ein Konvektorblech 20 angebunden, und zwar derart, dass die Basisflächen 21 des Konvektorbleches 20 mit den Außenflächen der Vertiefungen 12' der Halbschale H2 verbunden sind. Damit ergibt sich ein Paneel, bei dem ein Bereich der beiden Halbschalen H1, H2, und zwar die jeweiligen Erhebungen 13 der Halbschale H1 mit den Erhebungen 13' der Halbschale H2 verbunden sind; die vom Wärmeträgerfluid benetzte Innenoberfläche der Halbschalen H1 bzw. H2 ist damit begrenzt. Die Dicke des Paneels ist beträchtlich.

Betrachtet man hingegen einen Heiz-Kühlkörper, so wie dieser in erfindungsgemäßer Weise ausgebildet und in Fig. 4 dargestellt ist, so erkennt man, dass die Halbschalen H1, H2 Erhebungen 13, 13' und Vertiefungen 12, 12' besitzen, welche einen Strömungsweg S begrenzen, wobei vom Inneren des Heiz-Kühlkörpers, das heißt, vom Strömungsweg S her gesehen in die Vertiefungen 12 der einen Halbschale H1 die Erhebungen 13' der anderen Halbschale H2 hineinragen. Gleiches gilt für die in der Halbschale H1 ausgebildeten Erhebungen 13, welche in die Vertiefungen 12' der Halbschale H2 hineinragen. Damit wird ein relativ enger Strömungsweg S ausgebildet, der zwischen den Sammelkanälen 11 und 11' verläuft. Zweckmäßig ist vorgesehen, dass der Abstand von einander gegenüberliegenden Erhebungen und Vertiefungen bzw. die Dicke des Strömungsweges S 10 bis 30 % der Breite einer Vertiefung 12'der Halbschale H2 entspricht.

Die dem von den beiden Halbschalen H1, H2 begrenzten Strömungsweg S zugekehrten bzw. in diesen hineinragenden Erhebungen 13, 13' in der jeweils einen Halbschale sind zum Teil bzw. über einen Teilbereich ihrer Höhe von Vertiefungen 12, 12' aufgenommen, die in der dieser einen Halbschale H1 zugewandten Wand der gegenüberliegenden Halbschale H2 ausgebildet sind.

Es wird damit möglich, gleiche bzw. sehr ähnlich ausgebildete Werkzeuge bzw. Formen für die Fertigung der Halbschalen H1 und H2 zu verwenden. Des weiteren ergibt sich der Vorteil, dass beim Aneinanderlegen derart gleiche bzw. ähnliche Querschnittsform aufweisender Halbschalen diese Halbschalen mit geringem Abstand aneinander zu liegen kommen. Dabei ist es zweckmäßig, wenn die Halbschalen H1, H2 in, insbesondere linienförmigen, längs des Strömungsweges S verlaufenden bzw. gelegenen Berührungsstellen aneinander anliegen bzw. sich berühren, bzw. wenn die Flanken F' zwischen den Erhebungen 13 und Vertiefungen 12 der einen Halbschale H1 und die Flanken F' zwischen den Erhebungen 13' und Vertiefungen 12' der anderen Halbschale H2 aneinander anliegen oder einander zumindest längs einer Anzahl von Berührungspunkten oder Berührungsstreifen einander berühren. Es ergibt sich ein relativ dünner Strömungsweg S der lediglich durch die Bereiche unterbrochen wird, an denen die Halbschalen H1, H2 aneinander anliegen. Dieses Anliegen kann in gegebenenfalls unterbrochenen linienförmigen Berührungsstellen erfolgen oder punktweise bzw. in Berührungspunkten. Anforderungen an eine Dichtigkeit dieser Bereiche sind nicht zu stellen.

Für die Stabilität kann es von Vorteil sein, wenn die aufeinander folgenden Erhebungen 13, 13' und Vertiefungen 12, 12' ungleiche Breite B, B' in einer Schnittebene senkrecht zum Strömungsweg S aufweisen, wobei das Verhältnis der Breiten B:B' zwischen 1:1 und 1:2 liegt. Aus Fig. 4 erkennt man, dass vorteilhafterweise die Vertiefungen 12 der Halbschale H1 schmäler ausgebildet sind als die Erhebungen 13 dieser Halbschale. Entsprechend ist die Halbschale H2 angepasst.

Im Verlauf bzw. längs der im Gebrauch die Rückfläche R des Paneels bildenden Halbschale H2 in den den Strömungsweg S begrenzenden Vertiefungen 12' dieser Halbschale ist eine Anzahl von auf die jeweils andere, die Vorderfront V bildende Halbschale H1 hin gerichtete bzw. ausgeprägte Verbindungsnoppen 14 ausgebildet, die mit den Erhebungen 13 dieser im Gebrauch die Sichtfläche bzw. die Außenwandfläche des Paneels bildenden Halbschale H1 durch Schweißen, Löten, Kleben oder Clinchen verbunden sind. Diese Verbindungsnoppen 14 sind vorgesehen, um die Halbschale H1 mit der Halbschale H2 zu verbinden, um den im Inneren des Paneels herrschenden Fluiddruck standzuhalten. Im Bereich dieser Verbindungsnoppen 14 kann zusätzlich oder gleichzeitig mit der Erstellung des Paneels beim Zusammenfügen der Halbschalen H1, H2 auch ein Konvektorblech 20 angeschweißt, z.B. durch Widerstandpressschweißen, oder durch Clinchen angebunden werden. Dabei ist es vorteilhaft, wenn an der Außenwandfläche der Vertiefungen der im Gebrauch die Rückseite R eines Paneels oder die nach Innen gerichtete Wandfläche eines Paneels eines zweilagigen Heiz-Kühlkörpers die Basisflächen 21 eines wellenförmig bzw. winkelig abgebogenen bzw. abgekanteten Konvektionsbleches 20, vorzugsweise durch Schweißen, Löten, Kleben und/oder Clinchen, befestigt sind.

Um die beiden Halbschalen H1, H2 im Abstand zu halten ist es von Vorteil, wenn im Verlauf bzw. längs der im Gebrauch die Rückfläche R des Paneels bildenden Halbschale H2 in den die Erhebungen 13' bildenden Wandflächenbereichen eine Anzahl von auf die jeweils andere, d. h. die die Vorderfront V bildende bzw. außenliegende, Halbschale H1 hin gerichtete bzw. ausgeprägte Abstandshalter 15 ausgebildet bzw. ausgeprägt sind, die sich an der Innenwandfläche dieser gegenüberliegend angeordneten Halbschale H1 abstützen, die beiden Halbschalen H1 und H2 gegeneinander beabstanden und mit der Halbschale H1 gegebenenfalls durch Schweißen, Löten, Kleben und/oder Clinchen verbunden sein können. Prinzipiell könnten die Halbschalen H1, H2 im Bereich der Abstandhalter 15 auch durch Widerstandpressschweißen verbunden werden.

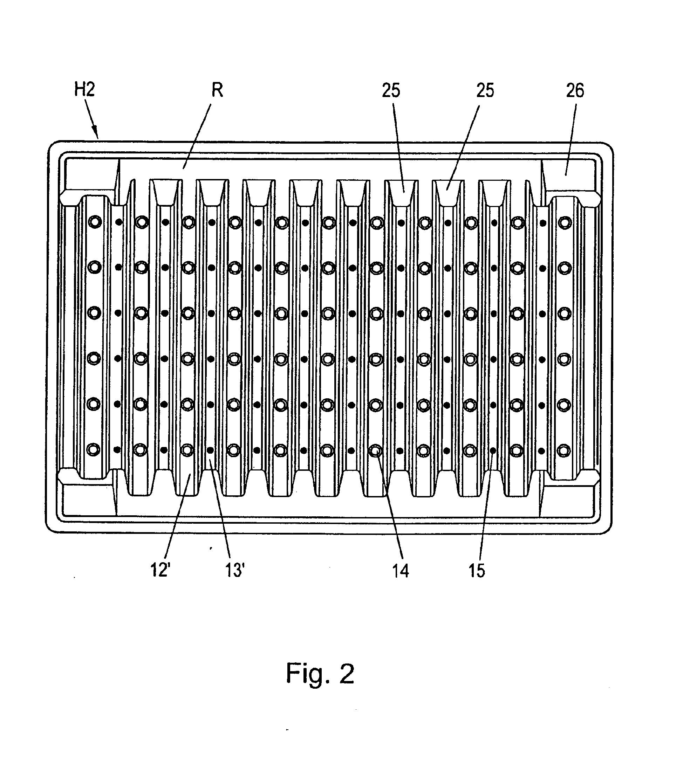

Aus Fig. 2, 5 und 6 ist ersichtlich, dass die Sammelkanäle 11 in ihrem dem Strömungsweg S zugekehrten Bereich auf der im Gebrauch die Rückseite R des Paneels bildenden Halbschale H2 mit Schrägflächen 25 begrenzt sind, die von der Wand des jeweiligen Sammelkanals 11 zu den Erhebungen 13' hin verlaufen und der Querschnitt des Sammelkanals 11 definieren. Damit ergibt sich ein einfacher und stabiler Aufbau der Paneele. Es wird bemerkt, dass diese in den Strömungsweg S ragenden Erhebungen 13' in einer Ansicht des Paneels von außen als Einbuchtungen gesehen werden.

Zur Ausbildung von Anschlüssen, insbesondere zur Verbindung von mehreren Paneelen zu zwei- oder mehrlagigen Heiz-Kühlkörpern ist es zweckmäßig, wenn die Sammelkanäle 11 in zumindest einem seitlichen Endbereich einen Endabschnitt 26 aufweisen, der von zueinander parallelen Wandflächen der Halbschalen H1, H2 bzw. des Sammelkanals 11 begrenzt ist, wobei in diesem Endabschnitt 26 Anschlüsse für das Wärmeträgerfluid ausgebildet werden.

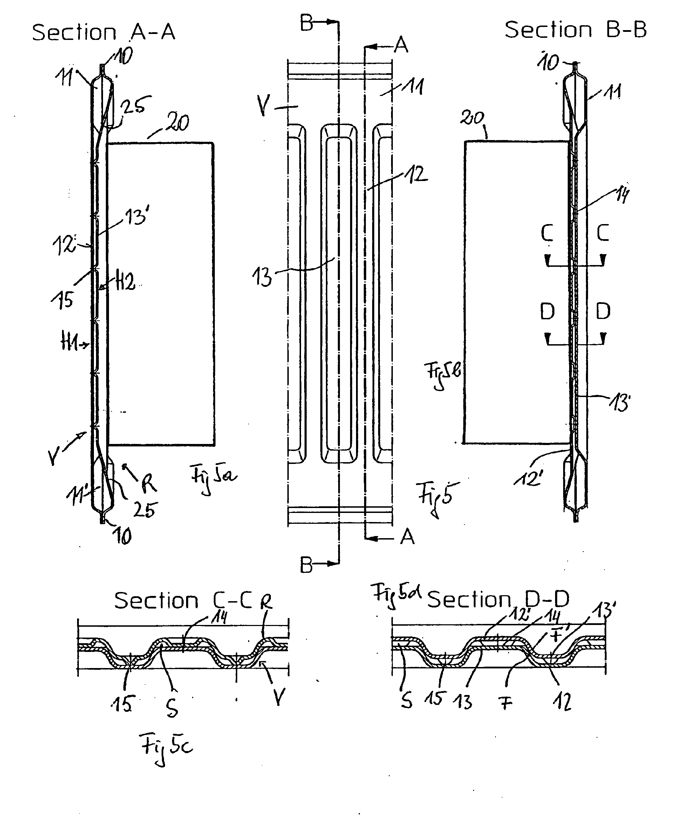

Fig. 5 zeigt eine Ausführungsform eines Paneels, bei der die Halbschalen H1, H2 längs der zwischen den Erhebungen und Vertiefungen verlaufenden bzw. diese verbindenden Flächen bzw. Flanken F, F' einander zumindest abschnittsweise längs dieser Schrägflächen bzw. Flanken F, F' berühren und/oder aneinander anliegen. Die Anordnung und Ausbildung der Flanken F, F' zeigen Fig. 5c und 5d. Man erkannt auch die Abstandhalter 15 und die Verbindungsnoppen 14. Fig. 5a, 5b zeigen Schnitte längs A-A bzw. B-B durch ein derartig ausgestaltetes Paneel. Die Querschnittsform der Halbschalen H1 und H2 entsprechen einander. Die Dicke des Strömungsweges S wird u.a. vom Flankenwinkel bestimmt, den die Flanken mit der Ebene des Paneels einschließen.

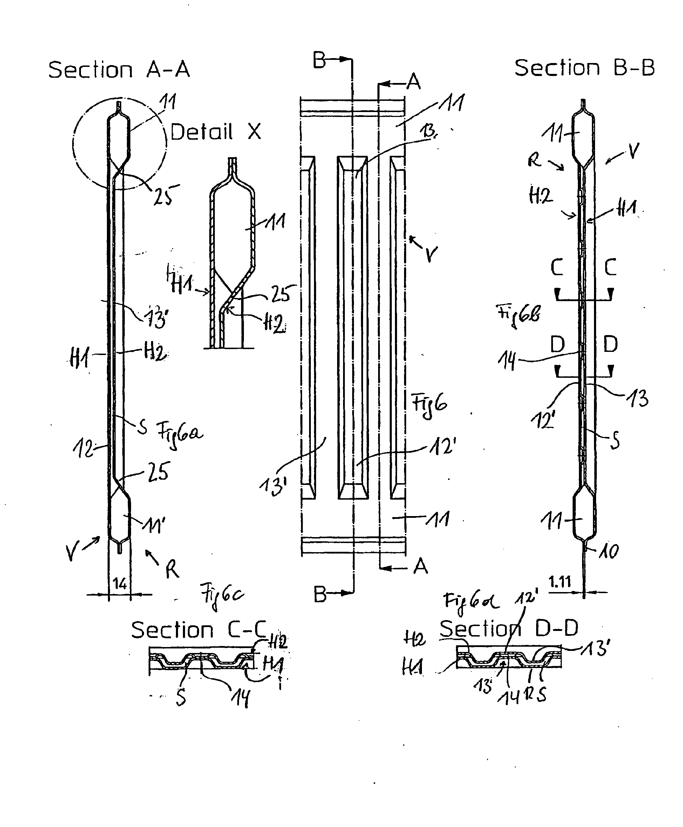

Fig. 6 zeigt ein Beispiel eines Paneels, bei der die Querschnittsform der Halbschalen H1 und H2 bezüglich der Ausbildung der Erhebungen und Vertiefungen so wie bei dem Paneel gemäß Fig. 5 aneinander angepasst ist. Bei diesem Paneel sind jedoch die Halbschalen H1, H2 durch die Verbindungsnoppen 14 im gegenseitigen Abstand voneinander gehalten. In diesem Fall werden Abstandhalter 15 in der Regel nicht vorgesehen, obwohl diese auch durchaus eingesetzt werden können. Es ergibt sich ein durchgehender Strömungsweg S, der im Querschnitt die Form eines gewellten Spaltes zeigt. Die Halbschalen H1 und H2 sind nur in ihrem Randbereich durch die Schweißnaht 10 und die Verbindungsnoppen 14 verbunden.

Prinzipiell wäre es möglich, bei dem Beispiel gemäß Fig. 6 zumindest eine der Halbschalen derart zu gestalten, dass die Halbschalen H1 und H2, ähnlich wie in Fig. 5 dargestellt, einander in ihren Flanken bzw. Schrägflächen zwischen den Erhebungen und Vertiefungen berühren oder aneinander anliegen.

Eine besonders vorteilhafte Form der Verbindung der beiden Halbschalen H1, H2 im Bereich der Verbindungsnoppen 14 allenfalls bei gleichzeitiger Verbindung mit der Basis 21 eines Konvektorbleches 20 erfolgt durch Clinchen. Zu diesem Zweck werden in die Basis 21 an die Verbindungsnoppen 14 angepasste Noppen ausgebildet. Dabei wird durch Materialverformung und Rückformung ein fluiddichter und fester Zusammenhalt zwischen den Halbschalen H1, H2 und der Basisflächen 21 des Konvektorbleches 20 erreicht. Diese Vorgangsweise stellt eine einfache Fertigungsmöglichkeit für die erfindungsgemäßen Paneele dar, die insbesondere im Bereich der Verbindungsnoppen 14 gut und effizient einsetzbar ist.

Von Vorteil ist es vor allem, dass aufgrund der erfindungsgemäßen Ausbildung des Strömungsweges S über die Breite eines Paneels sich eine im wesentlichen durchwegs gleiche Dicke des Strömungsweges S ergibt, sodass die Halbschalen H1, H2 über ihre Breitenerstreckung gleichmäßig erwärmt oder gekühlt werden.

Längs ihres Umfangs sind die Halbschalen H1, H2 über einen Schweißfalz 10 oder eine Rollfalzverbindung miteinander verbunden.

Insbesondere das Beispiel gemäß Fig. 6 bietet die Voraussetzung, dass die gesamte Oberfläche des Paneels mit Wärmeträgerfluid in Berührung steht, womit sich eine Vergleichmäßigung der Oberflächentemperatur und damit eine Verbesserung der Heiz-Kühlleistung einschließlich einer erhöhten Strahlungsleistung ergeben.

Durch die spezielle Anordnung der Halbschalen H1, H2 ergibt sich auch die Möglichkeit, dass bei gleichbleibender Gesamtbautiefe eines Paneels die Konvektionsbleche 20 tiefer bzw. der von ihnen begrenzte Raum größer ausgeführt werden können, weil das durch die Halbschalen H1, H2 erstellte Paneel in dem Bereich, in dem die Konvektionsfläche 20 angeformt bzw. befestigt werden, dünner ist. Es wird dadurch auch der Luftquerschnitt zwischen den Paneelen von zweilagigen Heiz-Kühlkörpern im Vergleich mit konventionellen Paneelen größer, wodurch es wiederum zu einer Leistungssteigerung kommt.

Die hydraulische Verbindung von Paneelen erfolgt im Bereich 26 durch Anschluss von Anschlussstücken, insbesondere T-Stücken durch Schweißen oder Löten, wobei innerhalb des Paneels in diesem Bereich entsprechende Stützelemente eingebaut sein können, um den Beanspruchungen beim Anschließen der Verbindungsstücke für mehrlagige Heiz-Körper bzw. beim Einsetzen der Anschlusselemente begegnen zu können. Im Bereich 26 können auch Anschlussteile im Sammelkanal 11 eingebaut sein.

Insbesondere bei Paneelen mit kleineren Bauhöhen können die Abstandhalter 15 entfallen; die Noppenprägungen bzw. Verbindungsnoppen 14 werden jedoch auch bei Paneelen kleinerer Dimension verwendet.

Um ein Verziehen von Paneelen bei ihrer Herstellung möglichst gering zu halten bzw. zu vermeiden, wird der rundum verlaufende Schweißfalz 10 in die parallel zu der Paneelebene verlaufende Symmetrieebene der Sammelkanäle 11 gelegt. Dabei wird durch die in der Halbschale H2 vorgesehenen Schrägflächen 25 der Übergang von der Rückfläche der Sammelkanäle 11 zum Strömungsweg S ausgebildet, wobei im Bereich der Vertiefungen 12 bzw. 12' der Halbschalen H1 und H2 die Symmetrie des Sammelkanals 11 in Hinblick auf dessen Vorder- und Rückfläche erhalten bleibt.

Der Vorteil des Clinchprozesses liegt darin, dass unterschiedliche Materialien wie z.B. Stahl, der für die Paneele eingesetzt wird, und Aluminium, das für die Konvektionsbleche 20 eingesetzt wird, rasch und fest verbunden werden können.

Von Vorteil ist es, wenn der Abstand von einander gegenüberliegenden Erhebungen und Vertiefungen bzw. die Dicke des Strömungsweges 5 bis 30 % der Breite B' des Sammelkanals entspricht. Ferner kann vorgesehen sein, dass in dem Bereich zwischen den Erhebungen 13, 13' und Vertiefungen 12, 12' der Halbschalen H1, H2 die Verbindungs- bzw. Schrägflächen bzw. die Flanken F, F' in Form einer linienförmigen Berührung aneinander anliegen.

Prinzipiell ist es möglich, die Vertiefungen 12, 12' und Erhebungen 13, 13' gleich breit auszubilden. Die Spaltdicke des Strömungsweges S senkrecht zu seinem Verlauf kann über die Breite des Paneels gleich bleiben oder sich, insbesondere in den Flankenbereichen, verändern bzw. verringern.

Die Verbindungsnoppen 14 und die Abstandhalter 15 werden durch Prägen, Sicken oder vergleichbare mechanische Bearbeitung der Paneelbleche ausgebildet, allenfalls gleichzeitig mit der Formung der Erhebungen und Vertiefungen.

Senkrecht zum Strömungsweg zeigen die Erhebungen und Vertiefungen und ihre zwischenliegenden Verbindungsflächen vorteilhafterweise trapezförmigen Verlauf mit gerundeten Kanten.

Die Basis 21 von Konvektorblechen 20 ist vorteilhafterweise an die Außenwandfläche der Erhebungen 13', das heißt der im Gebrauch üblicherweise innenliegenden Halbschale H2, angebunden, insbesondere durch Schweißen oder Clinchen.

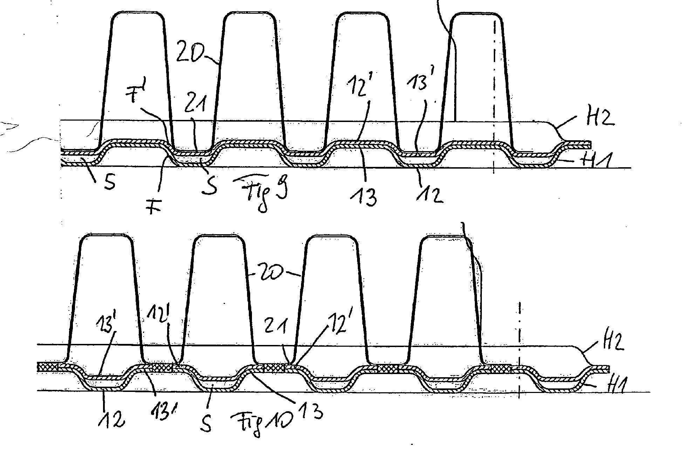

Die in den Fig. 9 und 10 dargestellten erfindungsgemäßen Heizkörperpaneele unterscheiden sich durch die Anbringung der Konvektorbleche 20. Die beiden Halbschalen H1 und H2 sind derart miteinander verbunden, dass die Innenwandflächen der Erhebungen 13 der Halbschale H1 und die Innenwandflächen der Vertiefungen 12' der Halbschale H2 aneinander anliegen. Des Weiteren liegen die Übergangsflächen F, F' zwischen den Erhebungen 13, 13' und den Vertiefungen 12, 12' zumindest zum Teil aneinander an bzw. öffnen sich gegenüber dem Strömungsweg S. Dieser Strömungsweg S wird gebildet durch die in gegenseitigem Abstand befindlichen Innenwandflächen der Erhebungen 13' der Halbschale H2 und Vertiefungen 12 der Halbschale H1.

Bei der Ausführungsform gemäß Fig. 9 sind die Basisflächen 21 direkt an der den Strömungsweg S begrenzenden Wandfläche der Erhebung 13' befestigt. Bei der Ausführungsform gemäß Fig. 10 ist eine einfache Befestigung der Basisflächen 21 an den miteinander verbundenen Wandflächen der Erhebungen 13 und Vertiefungen 12' vorgesehen.

Auch bei den Ausführungsformen gemäß den Fig. 5 bis 10 ist es möglich, entsprechende Verbindungsnoppen 14 bzw. Abstandshalter 15 auszubilden, um den Heizkörper stabil bzw. einfach herstellbar zu gestalten.

Die vorteilhafte Form des Strömungsweges S, so wie er in den einzelnen Ausführungsformen unterschiedlich dargestellt ist, wird vor allem von der Größe, Dicke und Herstellungsart der Paneele bestimmt, insbesondere um eine gute Wärmeabgabe bei geringer durchgesetzter Fluidmenge zu erreichen.

## Patentansprüche

1. Heiz-Kühlkörperpaneel, das mit zwei profilierten, in ihren Randbereichen miteinander fluiddicht verbundenen Halbschalen (H1, H2) gebildet ist, die zwischen sich zwei, vorzugsweise parallel verlaufende, Sammelkanäle (11) ausbilden, wobei der Strömungsweg (S) für das Arbeitsfluid zwischen den Sammelkanälen (11) von den beiden Halbschalen (H1, H2) begrenzt ist, die abwechselnd aufeinanderfolgende Erhebungen (13, 13') und Vertiefungen (12, 12') aufweisen, wobei die dem von den beiden Halbschalen (H1, H2) begrenzten Strömungsweg (S) zugekehrten und von der Innenwandfläche der verbundenen Halbschalen (H1, H2) in Richtung auf die jeweils andere Innenwandfläche zu aufragenden Erhebungen (13, 13') in der jeweils einen Halbschale (H1, H2) in Vertiefungen (12, 12') ragen, die in der dieser einen Halbschale (H1, H2) zugewandten Innenwandfläche der gegenüberliegenden Halbschale (H2, H1) ausgebildet sind, **dadurch gekennzeichnet, dass** die Flanken (F) zwischen den Erhebungen (13) und Vertiefungen (12) der einen Halbschale (H1) und die Flanken (F') zwischen den Erhebungen (13') und Vertiefungen (12') der anderen Halbschale (H2) aneinander anliegen oder einander zumindest längs einer Anzahl von Berührungspunkten oder Berührungsstreifen berühren.

2. Heiz-Kühlkörperpaneel nach Anspruch 1, **dadurch gekennzeichnet, dass** die Halbschalen (H1, H2) zwischen den Sammelkanälen (11) und im Bereich des zwischen den Halbschalen (H1, H2) ausgebildeten und von den Erhebungen (13, 13') und Vertiefungen (12, 12') begrenzten Strömungsweges (S) in Schnittebenen senkrecht zum Strömungsweg (S) gleiche Querschnittsform der Erhebungen (13, 13') und Vertiefungen (12, 12') zeigen.

3. Heiz-Kühlkörperpaneel nach Anspruch 1 oder 2, **dadurch gekennzeichnet,**
- **dass** die Halbschalen (H1, H2) in insbesondere streifen- oder linienförmigen, längs des Strömungsweges (S) verlaufenden Berührungsflächen aneinander anliegen oder sich berühren.

4. Heiz-Kühlkörperpaneel nach einem der Ansprüche 1 bis 3, **dadurch gekennzeichnet, dass** die Innenwandflächen von in der einen, vorzugsweise der außen liegenden, Halbschale (H1) aufeinander folgenden Erhebungen (13, 13') mit den Innenwandflächen der diese Erhebungen (13, 13') aufnehmenden Vertiefungen (12, 12') der jeweils anderen Halbschale (H2) verbunden sind, und dass die Innenwandflächen der Erhebungen (13, 13') der jeweils anderen Halbschale (H2) von den Innenwandflächen der Vertiefungen (12, 12') der einen Halbschale (H1) im Abstand voneinander liegen und der derart begrenzte Raum den Strömungsweg (S) darstellt. (Fig. 9, 10).

5. Heiz-Kühlkörperpaneel nach einem der Ansprüche 1 bis 4, **dadurch gekennzeichnet, dass** die in den jeweiligen Halbschalen (H1, H2) aufeinander folgenden Erhebungen (13, 13') und Vertiefungen (12, 12') in einer Schnittebene senkrecht zum Strömungsweg (S) ungleiche Breite (B, B') aufweisen, wobei das Verhältnis der Breiten B:B' der Vertiefungen (12) und der Erhebungen (13) in der Halbschale (H1) zwischen 1:1 und 1:2 liegt oder dass in der(n) im Gebrauch die Vorderseite (V) oder bei einem mehrlagigen Heiz-Kühlkörper die Vorderseite und die Rück- bzw. Wandseite bildenden Halbschale(n) (H1) die Vertiefungen (12) schmäler sind als die Erhebungen (13).

6. Heiz-Kühlkörperpaneel nach einem der Ansprüche 1 bis 5, **dadurch gekennzeichnet, dass** im Verlauf einer im Gebrauch die Rückfläche eines Paneels oder eine Innenfläche eines zweilagigen Heiz-Kühlkörpers bildenden Halbschale (H2) in den Vertiefungen (12') dieser Halbschale (H2) eine Anzahl von auf die jeweils andere, die Vorderfront (V) oder die Rückwand (R) bildende Halbschale (H1) hin gerichtete oder ausgeprägte Verbindungsnoppen (14) ausgebildet ist, die mit den Wandbereichen der Vertiefungen (13) dieser Halbschale (H1) durch Schweißen, Löten, Kleben oder Clinchen oder Durchsetzfugen verbunden sind.

7. Heiz-Kühlkörperpaneel nach einem der Ansprüche 1 bis 6, **dadurch gekennzeichnet, dass** im Verlauf der im Gebrauch die Rückfläche (R) des Paneels oder eine Innenfläche eines zweilagigen Heiz-Kühlkörpers bildenden Halbschale (H2) in den Wandbereichen der Erhebungen (13') dieser Halbschale (H2) eine Anzahl von auf die jeweils andere, die Vorderfront (V) bildende oder die außenliegende Halbschale (H1) hin gerichtete oder ausgeprägte Abstandshalter (15) ausgebildet ist, die sich an der Innenwandfläche der Vertiefungen (12) dieser gegenüberliegend angeordneten Halbschale (H1) abstützen und die beiden Halbschalen gegeneinander beabstanden und mit dieser Halbschale (H1) gegebenenfalls durch Schweißen, Löten, Kleben, Clinchen oder Durchsetzfugen verbunden sind.

8. Heiz-Kühlkörperpaneel nach einem der Ansprüche 1 bis 7, **dadurch gekennzeichnet, dass** an den Außenwandflächen der Vertiefungen (12') der im Gebrauch die Rückseite (R) eines Paneels oder die Innenwandfläche eines Paneels eines zweilagigen Heiz-Kühlkörpers darstellenden Halbschale (H2) die Basisflächen (21) eines wellenförmig oder winkelig abgebogenen oder abgekanteten Konvektionsbleches (20), vorzugsweise durch Schweißen, Löten, Kleben und/oder Clinchen, befestigt sind.

9. Heiz-Kühlkörperpaneel nach einem der Ansprüche 1 bis 8, **dadurch gekennzeichnet, dass** die Sammelkanäle (11) einer im Gebrauch die Rückseite (R) des Paneels oder die Innenwandflächen von Paneelen eines zweilagigen Heizkörpers bildenden Halbschale (H2) mit Schrägflächen (25) begrenzt sind, die vom jeweiligen Sammelkanal (11) zu den Erhebungen (13') hin verlaufen.

10. Heiz-Kühlkörperpaneel nach einem der Ansprüche 1 bis 9, **dadurch gekennzeichnet, dass** die Sammelkanäle (11) in zumindest einem ihrer seitlichen Endbereiche einen Endabschnitt (26) aufweisen, der von parallelen Wandflächen der beiden gegenüberliegenden Halbschalen (H1, H2) begrenzt ist, wobei in diesem Endabschnitt (26) Anschlüsse für das Wärmeträgerfluid ausgebildet oder Anschlussteile eingebaut sind.

11. Heiz-Kühlkörperpaneel nach einem der Ansprüche 1 bis 10, **dadurch gekennzeichnet, dass** in dem Bereich zwischen den Erhebungen (13, 13') und Vertiefungen (12, 12') der Halbschalen (H1, H2) die Verbindungs- bzw. Schrägflächen in Form einer längsverlaufenden oder linienförmigen, gegebenenfalls unterbrochenen, Berührung oder Berührungslinie aneinander anliegen.

12. Heiz-Kühlkörperpaneel nach einem der Ansprüche 1 bis 11, **dadurch gekennzeichnet, dass** die Erhebungen (13, 13') und Vertiefungen (12, 12') mit ihren Innenwandflächen längs der Übergangsbereiche bzw. Flanken (F, F') von den Erhebungen (13, 13') zu den Vertiefungen (12, 12') aneinander anliegen.

13. Heiz-Kühlkörperpaneel nach einem der Ansprüche 1 bis 12, **dadurch gekennzeichnet, dass** der Strömungsweg (S) von den in den beiden Halbschalen (H1, H2) abwechselnd aufeinanderfolgenden Erhebungen (13, 13') und Vertiefungen (12, 12') begrenzt ist oder dass der Strömungsweg (S) von allen vorhandenen Erhebungen (13, 13') und Vertiefungen (12, 12') oder nur von jeder zweiten Erhebung (13') in der einen Halbschale (H2) und der zugeordneten Vertiefung (12) in der jeweils anderen Halbschale begrenzt ist.

14. Heiz-Kühlkörperpaneel nach einem der Ansprüche 1 bis 13, **dadurch gekennzeichnet, dass** der gegenseitige Abstand (A) von einander gegenüberliegenden Erhebungen (13, 13') und Vertiefungen (12, 12') bzw. die Dicke des Strömungsweges 5 bis 30 % der Dicke (B') des Sammelkanals (11) entspricht.

## Claims

1. A heater-cooler panel formed by two profiled half-shells (H1, H2) in fluid-tight connection at their peripheral areas, which create between them two, preferably parallel collecting channels (11), the flow path (S) for the work fluid between the collecting channels (11) being limited by the two half-shells (H1, H2), which have alternately successive protrusions (13, 13') and recesses (12, 12'), wherein the protrusions (13, 13') in one of the half-shells (H1, H2) that face the flow path (S) limited by the two half-shells (H1, H2) and protrude away from one of the interior wall surfaces of the connected half-shells (H1, H2) and towards the other interior wall surface protrude into recesses (12, 12') formed in the interior wall surface of the opposite half-shell (H1, H2) that faces said one half-shell (H1, H2), **characterised in that** the flanks (F) between the protrusions (13) and recesses (12) of said one half-shell (H1) and the flanks (F') between the protrusions (13') and recesses (12') of the other half-shell (H2) abut each other or at least contact each other along a number of contact points or contact strips.

2. The heater-cooler panel of claim 1, **characterised in that** the half-shells (H1, H2) between the collecting channels (11) and within the area of the flow path (S) created between the half-shells (H1, H2) and limited by the protrusions (13, 13') and recesses (12, 12') show equal cross-sectional shapes of protrusions (13, 13') and recesses (12, 12') in sectional planes vertical to the flow path.

3. The heater-cooler panel of claim 1 or claim 2, **characterised in that** the half-shells (H1, H2) abut each other or contact each other in particularly striate or linear contact areas running along the flow path (S).

4. The heater-cooler panel of any one of claims 1 to 3, **characterised in that** the interior wall surfaces of successive protrusions (13, 13') in said one half-shell, preferably the outer one, are connected with the interior wall surfaces of the recesses (12, 12') of the other half-shell (H2) receiving said protrusions (13, 13') and **in that** the interior wall surfaces of the protrusions (13, 13') of the other half-shell (H2) are positioned at a distance from the interior wall surfaces of the recesses (12, 12') of said one half-shell (H1), with the space thereby circumscribed being the flow path (S) (figs. 9, 10).

5. The heater-cooler panel of any one of claims 1 to 4, **characterised in that** the successive protrusions (13, 13') and recesses (12, 12') in each of the half-shells (H1, H2) have unequal widths (B, B') in a sectional plane vertical to the flow path (S), wherein the ratio of widths B:B' between the recesses (12) and the protrusions (13) in said half-shell (H1) is between 1:1 and 1:2, or **in that** the recesses (12) are narrower than the protrusions (13) in the half-shell(s) (H1) which,during use, form(s) the front side (V) or the front and back, i.e. wall, sides in a multi-layered heater-cooler.

6. The heater-cooler panel of any one of claims 1 to 5, **characterised in that**, in the course of a half-shell (H2) which,during use, forms the back surface of a panel or the interior wall of a bilayered heater-cooler, a number of connecting nubs(14) directed or pronounced towards the other half-shell (H1), which forms the front side (V) or the back wall (R), respectively, are formed in the recesses (12') of said half-shell (H2) and connected to the wall areas of the recesses (12) of said half-shell (H1) by welding, soldering, bonding, clinching or press-joining.

7. The heater-cooler panel of any one of claims 1 to 6, **characterised in that**, in the course of a half-shell (H2) which,during use, forms the back surface of the panel or the interior wall of a bilayered heater-cooler, a number of spacers (15) directed or pronounced towards the other half-shell (H1), which forms the front side (V), or the outer half-shell (H1), and supported by the interior wall surface of the recesses (12) of said opposite half-shell (H1) are formed in the wall areas of the protrusions (13') of said half-shell (H2), spacing the two half-shells apart from each other and optionally being connected to said half-shell (H1) by welding, soldering, bonding, clinching or press-joining.

8. The heater-cooler of any one of claims 1 to 7, **characterised in that** the basal planes (21) of a convection sheet cranked or bevelled in an undulated or angled manner are attached to the exterior wall surfaces of the recesses (12') of the half-shell (H2) which,during use, forms the back side (R) of a panel or the interior wall surface of the panel of a bilayered heater-cooler, preferably by welding, soldering, bonding and/or clinching.

9. The heater-cooler panel of any one of claims 1 to 8, **characterised in that** the collecting channels (11) of a half-shell (H2) which,during use, forms the back side (R) of a panel or the interior wall surfaces of panels of a bilayered heater are limited by bevelled surfaces (25), which extend from each respective collecting channel (11) to the protrusions (13').

10. The heater-cooler panel of any one of claims 1 to 9, **characterised in that** the collecting channels (11) have an end portion (26) limited by parallel wall surfaces of the two opposite half-shells (H1, H2) in at least one of their lateral end areas, where ports for the heat-transfer fluid are formed within, or connecting parts integrated into, said end portion (26).

11. The heater-cooler panel of any one of claims 1 to 10, **characterised in that** the connecting or bevelled surfaces in the area between the protrusions (13, 13') and the recesses (12, 12') of the half-shells (H1, H2) are adjacent to each other in the form of a longitudinal or linear, optionally discontinuous, contact or contact line.

12. The heater-cooler panel of any one of claims 1 to 11, **characterised in that** the protrusions (13, 13') and recesses (12, 12') abut each other via their interior wall surfaces along the transition area or flanks (F, F') from said protrusions (13, 13') to said recesses (12, 12')

13. The heater-cooler panel of any one of claims 1 to 12, **characterised in that** the flow path (S) is limited by the alternately successive protrusions (13, 13') and recesses (12, 12') in the two half-shells (H1, H2), or that the flow path (S) is limited by all protrusions (13, 13') and recesses (12, 12') present or by every other protrusion (13') in the one half-shell (H2) and the corresponding recess (12) in the other half-shell.

14. The heater-cooler panel of any one of claims 1 to 13, **characterised in that** the respective mutual distance (A) between opposite protrusions (13, 13') and recesses (12, 12'), i.e. the thickness of the flow path (S), is 5 to 30 % of the thickness (B') of the collecting channel (11).

## Revendications

1. Panneau de chauffage/rafraîchissement formé par deux demi-coques (H1, H2) reliées de manière étanche au niveau de leurs zones périphériques, formant entre elles deux canaux collecteurs (11), de préférence parallèles, le trajet (S) d'écoulement pour le fluide de travail entre les canaux collecteurs (11) étant limité par les deux demi-coques (H1, H2) comportant des saillies (13, 13') et des creux (12, 12')se succédant en alternance, les saillies (13, 13') dans l'une des demi-coques (H1, H2) en face du trajet (S) d'écoulement limité par les deux demi-coques (H1, H2), et saillant à partir de l'une des surfaces de la cloison intérieure des demi-coques (H1, H2) reliées et vers la surface de la cloison intérieure de la demi-coque (H1, H2), saillissant dans des creux(12, 12') formées dans la surface de la cloison intérieure de la demi-coque (H1, H2) opposée en face de ladite première demi-coque (H1, H2), **caractérisé en ce que** les flancs (F) entre les saillies (13) et les creux(12) de l'une des demi-coques (H1) et les flancs (F') entre les saillies (13') et les creux(12') de l'autre demi-coque (H2) sont disposés contigues ou sont, au moins, en contact entre eux le long d'un nombre de points de contact ou de bandes de contact.

2. Panneau de chauffage/rafraîchissement selon la revendication 1, **caractérisé en ce que** les demi-coques (H1, H2) entre les canaux collecteurs (11) et dans la région du trajet (S) d'écoulement crée entre les demi-coques (H1, H2) et limité par les saillies (13, 13') et les creux(12, 12') présentent des formes de section transversale de saillie (13, 13') et de creux (12, 12') égales dans des plans de section perpendiculaires au trajet (S) d'écoulement.

3. Panneau de chauffage/rafraîchissement selon les revendications 1 ou 2, **caractérisé en ce que** les demi-coques (H1, H2) sont disposées côte à côte ou en contact entre elles sur des surfaces de contact situées le long du trajet (S) d'écoulement,notamment en forme de bandes ou de lignes.

4. Panneau de chauffage/rafraîchissement selon les revendications 1 à 3, **caractérisé en ce que** les surfaces des cloisons intérieures de saillies (13, 13') se succédant dans l'une des demi-coques (H1), de préférence la demi-coque extérieure, sont reliées avec les surfaces des cloisons intérieures des creux(12, 12') de l'autre demi-coque (H2) recevant lesdites saillies (13, 13'), et **en ce que** les surfaces des cloisons intérieures des saillies (13, 13') de l'autre demi-coque (H2) sont disposées avec un écart par rapport aux surfaces des cloisons intérieures des cavités (12, 12') de l'une des demi-coques (H1) et **en ce que** l'espace ainsi délimité représente le trajet (S) d'écoulement (Fig. 9, 10).

5. Panneau de chauffage/rafraîchissement selon les revendications 1 à 4, **caractérisé en ce que** les saillies (13, 13') et les creux(12, 12') se succédant dans les respectives demi-coques (H1, H2) présentent dans un plan de section perpendiculaire au trajet (S) d'écoulement une largeur (B, B') inégale, la relation entre les largeurs B:B' des creux(12) et ceux des saillies (13) dans la demi-coque (H1) est entre 1 :1 et 1 :2 ou **en ce que** les creux(12) sont moins épaisses que les saillies (13) dans celle(s) demi-coupe(s) qui, lors de l'utilisation, forme(nt) la face avant (V) ou, dans un dispositif de chauffage/rafraîchissement multicouche, la face avant et la face arrière ou de cloison.

6. Panneau de chauffage/rafraîchissement selon les revendications 1 à 5, **caractérisé en ce que** le long de l'une demi-coque (H2) formant, lors de l'utilisation, la face arrière d'un panneau ou une surface intérieure d'un dispositif de chauffage/rafraîchissement à deux couches, un nombre de bosses (14) de liaison orientées ou prononcées vers l'autre demi-coque (H1) formant la face avant (V) ou la face arrière (R), sont formées dans les creux(12') de cette demi-coque (H2) et reliées avec les zones de cloison des creux(12') de cette demi-coque (H1) par soudage, brasage, collage, clinchage ou sertissage.

7. Panneau de chauffage/rafraîchissement selon les revendications 1 à 6, **caractérisé en ce que** le long del'une demi-coque (H2) formant, lors de l'utilisation, la face arrière du panneau ou une surface intérieure d'un dispositif de chauffage/rafraîchissement à deux couches, un nombre d'écarteurs (15) orientés ou prononcés vers l'autre demi-coque (H1) formant la face avant (V), ou la demi-coque (H1) extérieure, et supportés par la face des cloisons intérieures des creux(12) de la demi-coque (H1) opposée, sont formés dans les zones de cloison des saillies (13) de la demi-coque (H1), créant un écart entre les deux demi-coques et éventuellement étant reliés à la demi-coque (H1) par soudage, brasage, collage, clinchage ou sertissage.

8. Panneau de chauffage/rafraîchissement selon les revendications 1 à 7, **caractérisé en ce que** sur les surfaces des cloisons extérieures des cavités (12') de la demi-coque (H2) représentant, lors de l'utilisation, la face arrière (R) d'un panneau ou la surface de la cloison interieure d'un panneau d'un dispositif de chauffage/refraîchissement à deux couches, les surfaces (21) de base d'une feuille de convection (20) tordue ou repliée de façon ondulée ou angulaire, sont attachés de préférence par soudage, brasage, collage et/ou clinchage.

9. Panneau de chauffage/rafraîchissement selon les revendications 1 à 8, **caractérisé en ce que** les canaux collecteurs (11) de la demi-coque (H2) formant, lors de l'utilisation, la face arrière (R) du panneau ou les surfaces des cloisons intérieures de panneaux d'un dispositif de chauffage/rafraîchissement à deux couches, sont délimités par des surfaces biseautées (25) s'étendant depuis chaque canal collecteur (11) jusqu'aux saillies (13').

10. Panneau de chauffage/rafraîchissement selon les revendications 1 à 9, **caractérisé en ce que** les canaux collecteurs (11) comportent une portion (26) d'extrémité dans au moins une de leurs zones d'extrémité latérales, délimitée par des surfaces de cloison parallèles des deux demi-coques (H1, H2) opposées, des raccordements pour le fluide caloporteur étant formés ou des pièces de raccordement étant intégrées dans cette portion (26) d'extrémité.

11. Panneau de chauffage/rafraîchissement selon les revendications 1 à 10, **caractérisé en ce que** dans la zone entre les saillies (13, 13') et les creux (12, 12') des demi-coques (H1, H2) les surfaces de liaison/biseautées sont disposées côte à côte sous forme d'un contact ou une ligne de contact longitudinal(e) ou linéaire, éventuellement discontinu(e).

12. Panneau de chauffage/rafraîchissement selon les revendications 1 à 11, **caractérisé en ce que** les saillies (13, 13') et les creux(12, 12') sont disposées contigues, leurs surfaces des cloisons intérieures étant situées le long des zones de transition ou des flancs (F, F') entre les saillies (13, 13') et les cavités (12, 12').

13. Panneau de chauffage/rafraîchissement selon les revendications 1 à 12 **caractérisé en ce que** le trajet (5) d'écoulement est délimité par les saillies (13, 13') et des cavités (12, 12') s'alternant successivement dans les deux demi-coques (H1, H2) ou en ce que le trajet (S) d'écoulement est délimité par toutes les saillies (13, 13') et toutes les cavités (12, 12') présentes ou seulement par chaque deuxième saillie (13') dans l'une demi-coque (H2) et la cavité (12) respective dans l'autre demi-coque.

14. Panneau de chauffage/rafraîchissement selon les revendications 1 à 13, **caractérisé en ce que** l'écart (A) respectif entre des saillies (13, 13') et des creux(12, 12') opposées ou l'épaisseur du trajet (S) d'écoulement correspond à 5 à 30 % de l'épaisseur (B') du canal collecteur (11).
